# EUROPÄISCHE PATENTSCHRIFT

(11) **EP 2 789 868 B1**
(45) Veröffentlichungstag und Bekanntmachung des Hinweises auf die Patenterteilung: **08.08.2018**
(21) Anmeldenummer: 14164317.1
(22) Anmeldetag: 11.04.2014
(51) Int. Cl.: F16C 29/08

(54) **System und Verfahren zum Fixieren eines Abdeckbandes in einer Längsnut einer Führungsschiene**
System and method for fixing a cover strip in a longitudinal groove of a guide rail
Système et procédé de fixation d'une bande de recouvrement dans une rainure longitudinale d'un rail de guidage

(30) Priorität: 11.04.2013 DE 102013206351
(43) Veröffentlichungstag der Anmeldung: 15.10.2014
(73) Patentinhaber: Aktiebolaget SKF, 415 50 Göteborg (SE)
(72) Erfinder: Edelmann, Ludwig, 97717 Sulzthal (DE); Gransow, Anita, 97526 Sennfeld (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Kuhstrebe, Jochen

(56) Entgegenhaltungen:
- DE-A1- 19 524 810
- JP-A- 2007 046 691
- JP-A- 2007 064 448
- JP-A- 2008 057 699
- JP-A- 2012 107 666
- TW-U- M 350 633

## Beschreibung

Ausführungsbeispiele der vorliegenden Erfindung betreffen Linearführungen und insbesondere Vorrichtungen und Verfahren zum Fixieren von Abdeckbändern in Längsnuten von Linearführungen.

Unter einer Linearführung versteht man im Allgemeinen eine Anordnung, die eine möglichst reibungsfreie Translation einer oder mehrerer beweglicher Baugruppen einer Maschine ermöglicht und dabei gleichzeitig eine Einhaltung der Bewegungsrichtung in Form einer linearen Bahn garantiert. Man kann Linearführungen nach ihrer Lagerung grundsätzlich in Gleitführungen und Wälzführungen unterteilen. Wälzführungen beruhen auf dem Prinzip der Umwälzung von Wälzkörpern zwischen zwei relativ zueinander bewegten Führungselementen. Als Wälzkörper können, wie beim Rotationswälzlager, beispielsweise Kugeln, Rollen, Nadeln oder andere Wälzkörper dienen. Zu den Wälzführungen gehören beispielsweise Profilschienenführungen oder Linearkugellager, welche auch als Kugelbuchsen bezeichnet werden können. Hierbei sind Linearführungen nicht auf ausschließlich lineare Bewegungen beschränkt. Sie ermöglichen vielmehr eine translatorische Bewegung im Vergleich zu rotatorischen Bewegungen, die durch entsprechende Rotationswälzlager geführt werden. Gerade im Bereich der Linearlager werden die Begriffe "linear" und "translatorisch" daher häufig synonym verwendet.

Mit Hilfe von Linearführungen lassen sich präzise Translationsbewegungen in vielfältigen Anwendungssituationen realisieren. Eine Linearführung weist im Allgemeinen eine Führungsschiene, wie z. B. eine Welle oder eine Profilschiene, und einen Linear- bzw. Führungswagen auf, der, gemäß manchen Ausführungsformen, insbesondere bei Linearkugellagern, auch als Buchse ausgebildet sein kann, und welcher linear beweglich auf der Führungsschiene angeordnet ist. Insbesondere in Anwendungssituationen, bei denen eine Amplitude der Linearbewegung in einer Größenordnung der Außenabmessungen des Führungswagens parallel zur Bewegungsrichtung liegt oder diese sogar übersteigt, werden häufig so genannte Kugelumlaufführungen eingesetzt. Eine Kugelumlaufführung zeichnet sich dadurch aus, dass der Führungswagen mittels Kugeln relativ zur Führungsschiene beweglich gelagert ist und dass die Kugeln auf einer geschlossenen, also quasi endlosen, Bahn umlaufen. Eine Kugelumlaufführung ermöglicht somit eine beliebige lineare Beweglichkeit des Führungswagens relativ zur Führungsschiene, die nur durch die Abmessungen der Führungsschiene und gegebenenfalls durch eine Einbauumgebung begrenzt wird.

Bei den so genannten Profilschienenführungen umgreift der Führungswagen, der in diesem Zusammenhang auch als Laufwagen bezeichnet werden kann, mit einem im Wesentlichen U-förmigen Querschnitt eine profilierte Führungs- bzw. Profilschiene. Der Führungswagen ist dabei auf der Führungsschiene wälzgelagert. In anderen Worten ausgedrückt bildet der Führungswagen einen äußeren Führungsteil der Linearführung und die Führungsschiene einen inneren Führungsteil der Profilschienenführung, wobei sich inneres und äußeres Führungsteil gegenseitig über Wälzkörper abstützen.

Führungsschienen werden häufig mittels Befestigungsmitteln, wie z. B. Schrauben, auf einem Maschinenbett von Werkzeugmaschinen befestigt, wobei im Maschinenbett üblicherweise ein Gewinde angebracht ist und die Führungs- bzw. Profilschienen eine Durchgangs- bzw. Montagebohrung für die Befestigungsschrauben aufweisen. Während des Betriebs der Maschine bzw. der Linearführung kommt es häufig zu Verschmutzungen, welche sich unter anderem in den Bohrungen der Führungsschiene sammeln können. Eine derartige Schmutzansammlung ist aber nachteilhaft, da beim Betrieb der Maschine bzw. der Linearführung Schmutz aus den Bohrungen auf die Führung gelangen kann und somit deren Verschleiß erhöhen bzw. eine Genauigkeit der Linearführung beeinträchtigen kann. Abhilfe bieten beispielsweise Verschlussstopfen oder Abdeckleisten bzw. -bänder, mit denen die Montagebohrungen der Führungsschiene verschlossen werden können.

Die Lebensdauer der Linearführungen ist stark von der Abdichtung des gesamten Führungssystems abhängig und deswegen ist man bemüht, die Abdichtung des Führungssystems ständig weiter zu optimieren. Eine der erfolgreichsten und wirkungsvollsten Methoden der Abdeckung ist die Abdeckung der Montagebohrungen in der Führungsschiene durch ein Abdeckband aus Kunststoff und/oder Metall. Dadurch entsteht eine in Bewegungsrichtung homogene Fläche, die sowohl die Systemabdichtung verbessert als auch Reibungsschwankungen des Führungswagens auf der Führungsschiene eliminiert. Bei derartigen Abdichtungskonzepten stellt eine Befestigung des Abdeckbands auf der Führungsschiene ein Problem dar. Solche Abdeckbänder können beispielsweise durch Kleben oder durch formschlüssige Clipverbindungen auf der Profilschiene fixiert werden, wie es beispielsweise in der JP 2008-57699A oder der TW M 350 633 U offenbart ist. Vor diesem Hintergrund ist es eine Aufgabe der vorliegenden Erfindung, ein verbessertes Konzept zum Fixieren von Abdeckbändern auf einer Führungsschiene eines Linearsystems bereitzustellen.

Es ist ein Grundgedanke der vorliegenden Erfindung, ein Abdeckband nicht direkt mit der Führungsschiene zu koppeln bzw. zu verbinden, um die Führungsschiene abzudecken, sondern das Abdeckband mit Hilfe von zusätzlichen Halterungselementen, welche die Abdeckleiste bzw. das Abdeckband mit der Führungsschiene koppeln, zu fixieren. Dabei wird davon ausgegangen, dass die Führungs- bzw. Profilschiene der Linearführung eine Längsnut aufweist, welche zum Aufnehmen des Abdeckbands dient. In anderen Worten ausgedrückt wird also das Abdeckband in eine entsprechend dimensionierte Längsnut der Führungsschiene eingelegt. Damit das Abdeckband in der Längsnut gehalten werden kann, sehen Ausführungsbeispiele der vorliegenden Erfindung zum einen eine besondere Querschnittsform des Abdeckbands vor und zum anderen Halteelemente, die das speziell geformte Abdeckband in der Längsnut der Führungsschiene fixieren.

Das Abdeckband weist gemäß Ausführungsbeispielen einen im Wesentlichen U-förmigen Querschnitt auf, d. h. es umfasst einen horizontal verlaufenden Mittelabschnitt, von dem sich zwei nach unten abgeknickte bzw. abgewinkelte Seitenabschnitte erstrecken. Dabei kann ein Winkel zwischen dem Mittelabschnitt und einem Seitabschnitt beispielsweise in einem Bereich von 45° bis 120° liegen, insbesondere zwischen 70° und 90°. Das U-förmige Abdeckband wird derart in die Längsnut eingelegt, dass die abgewinkelten Seitenabschnitte beim Einlegen des Abdeckbands in die Längsnut parallel zu den Seitenwänden der Längsnut, verlaufen. Halteelemente können nun mit einem Ende in die Montagebohrungen der Führungsschiene eingebracht werden, wobei die Montagebohrungen in eine Bodenfläche der Längsnut münden. Mit einem anderen Ende können die Halteelemente eine Haltekraft auf die abgewinkelten Seitenabschnitte des in die Längsnut eingelegten Abdeckbands ausüben. Diese Haltekraft drückt die abgewinkelten Seitenabschnitte des Abdeckbands von innen nach außen gegen die Seitenwände der Längsnut, wodurch das Abdeckband form- und/oder kraftschlüssig in der Längsnut der Führungsschiene gehalten wird.

Gemäß einem ersten Aspekt sehen Ausführungsbeispiele der vorliegenden Erfindung eine Vorrichtung zum Fixieren eines Abdeckbands in einer Längsnut einer Führungsschiene vor, wobei das Abdeckband zum Abdecken von in der Längsnut endenden (Montage-) Bohrungen dient, die in einer ersten Richtung senkrecht zu einer Längsachse der Führungsschiene verlaufen, wobei das Abdeckband abgewinkelte Seitenabschnitte aufweist, die beim Einlegen des Abdeckbands in die Längsnut parallel zu Seitenwänden der Längsnut, d.h. parallel zu der Längsrichtung, verlaufen. Es ist wenigstens ein Halteelement vorgesehen, welches einen Zapfen zum Eingreifen in eine Bohrung aufweist, wobei das Halteelement einen dem Abdeckband zugewandten Halteabschnitt aufweist, der ausgebildet ist, um beim Einbringen des Abdeckbands in die Längsnut auf dessen abgewinkelte Seitenabschnitte eine Haltekraft in eine zweite Richtung auszuüben, die sowohl senkrecht zu der Längsachse der Führungsschiene als auch senkrecht zu der ersten Richtung ist. Die Längsachse der Führungsschiene, die erste Richtung und die zweite Richtung spannen zusammen also ein dreidimensionales, orthogonales Koordinatensystem auf. Die drei Richtungsachsen (Längsachse, erste Richtung, zweite Richtung) stehen jeweils im Wesentlichen orthogonal aufeinander, schneiden sich also im Wesentlichen unter einem 90°-Winkel.

Bei der Führungsschiene kann es sich beispielsweise um eine Profilschiene einer Linearführung handeln, auf der ein Führungswagen z. B. in einer so genannten X-Anordnung gelagert werden kann. Das Abdeckband weist bevorzugt eine Breite auf, die im Wesentlichen der Breite der Längsnut entspricht. Dabei bedeutet "im Wesentlichen", dass die Breite des Abdeckbands so bemessen ist, dass es in die Längsnut der Führungsschiene eingelegt werden kann. Gemäß manchen Ausführungsbeispielen kann das abgewinkelte bzw. U-förmige Abdeckband hinsichtlich seiner Breite ein leichtes Übermaß gegenüber der Längsnut aufweisen, sodass es beim Einlegen des Abdeckbands in die Längsnut bereits zu einer (leichten) Presspassung zwischen den abgewinkelten Seitenabschnitten des Abdeckbands und den entsprechenden Seitenwänden der Längsnut kommen kann. Das hat den Vorteil, dass somit das Abdeckband durch die Presspassung besser in der Längsnut fixiert werden kann. Gemäß Ausführungsbeispielen ist das wenigstens eine Halteelement ausgebildet, um das im Wesentlichen U-förmige Abdeckband mittels einer formschlüssigen Verbindung zwischen dem Halteabschnitt und der abgewinkelten Seitenabschnitte des Abdeckbands in der Längsnut bzw. zwischen deren Seitenwänden zu fixieren. Um die formschlüssige Verbindung bzw. Fixierung zu erhalten, kann sich das wenigstens eine Halteelement in montiertem Zustand mit seinem dem Abdeckband zugewandten Halteabschnitt in der ersten Richtung (d. h. in senkrechter Richtung) bis in die Längsnut erstrecken. Eine Erstreckung bzw. Ausdehnung des Halteabschnitts in der zweiten Richtung (d. h. horizontal in Richtung Breite der Längsnut) kann dabei größer sein als ein Durchmesser der Bohrung. Das bedeutet, dass das Halteelement mit seinem Zapfen, der im Wesentlichen eine zur Bohrung passende Querschnittsform hat, in der Bohrung fixiert wird. Außerhalb der Bohrung, d. h. oberhalb des Zapfens, erstreckt sich dann der Halteabschnitt derart in der Längsnut, dass die abgewinkelten Seitenabschnitte des Abdeckbands zwischen Kontaktbereichen des Halteabschnitts und den Seitenwänden der Längsnut gehalten bzw. fixiert werden können.

Um eine gute kraft- und/oder formschlüssige Fixierung des Abdeckbands bzw. dessen abgewinkelter Seitenabschnitte in der Längsnut zu erreichen, ist der Halteabschnitt zumindest in der zweiten Richtung (d. h. quer zur Längsachse der Längsnut) elastisch ausgebildet, um beim Einbringen der abgewinkelten Seitenabschnitte des Abdeckbands zwischen den Halteabschnitt und die Seitenwände der Längsnut in der zweiten Richtung nachgeben zu können und ansprechend darauf eine elastische Rückstellkraft als Haltekraft zu erhalten, welche die abgewinkelten Seitenabschnitte des Abdeckbands gegen die Seitenwände der Längsnut drückt und damit das gesamte Abdeckband in der Längsnut fixiert.

Dazu weist der Halteabschnitt gemäß Ausführungsbeispielen einen ersten und einen zweiten elastischen Kontaktbereich auf, wobei der erste elastische Kontaktbereich einer ersten Seitenwand der Längsnut zugeordnet ist und wobei der zweite elastische Kontaktbereich einer zweiten gegenüberliegenden Seitenwand der Längsnut zugeordnet ist. Ein erster abgewinkelter Seitenabschnitt, d. h. eine erste abgeknickte Schulter, des Abdeckbands wird zwischen dem ersten elastischen Kontaktbereich des Halteabschnitts und der ersten Seitenwand der Längsnut eingeklemmt. Ein zweiter abgewinkelter Seitenabschnitt bzw. eine zweite abgewinkelte Schulter des Abdeckbands wird zwischen dem zweiten elastischen Kontaktbereich des Halteabschnitts und der zweiten Seitenwand der Längsnut eingeklemmt, um die form- bzw. kraftschlüssige Fixierung des Abdeckbands in der Längsnut zu erreichen.

Der Halteabschnitt und/oder dessen elastische Kontaktbereiche können durch unterschiedliche Materialien mit unterschiedlichen Geometrien erhalten werden. Beispielsweise kann das komplette Halteelement samt Zapfen und Halteabschnitt gemäß manchen Ausführungsformen aus Kunststoff gefertigt sein, beispielsweise mittels eines Spritzgussverfahrens. Der Halteabschnitt bzw. dessen elastische Kontaktbereiche können dann demgemäß durch elastische Kunststoffvorsprünge gebildet werden, welche ausgebildet sind, um die abgeknickten Schultern des Abdeckbands von innen gegen die Seitenflächen der Längsnut zu pressen. Gemäß anderen Ausführungsformen kann das Halteelement auch komplett aus Metall gefertigt sein, was insbesondere eine hohe Verschleiß festigkeit und Temperaturbeständigkeit zur Folge hat. Gemäß noch weiteren Ausführungsbeispielen kann das wenigstens eine Halteelement auch aus unterschiedlichen Materialien aufgebaut sein. So kann der in die Bohrung eingreifende Zapfen beispielsweise aus Kunststoff gefertigt sein, wohingegen der Halteabschnitt aus einem elastischen Metall, wie z. B. Federstahl, gefertigt sein kann. Insbesondere kann der Halteabschnitt aus Drähten, wie z. B. Stahldrähten, gebildet werden. Gemäß manchen Ausführungsbeispielen können der erste und der zweite elastische Kontaktbereich jeweils durch (in montiertem Zustand des Halteelements) zu der ersten und der zweiten Seitenwand hin gebogene Drahtabschnitte gebildet werden, sodass der erste abgewinkelte Seitenabschnitt des Abdeckbands zwischen dem ersten elastischen Drahtabschnitt und der ersten Seitenwand der Längsnut eingeklemmt werden kann, und sodass der zweite abgewinkelte Seitenabschnitt des Abdeckbands zwischen dem zweiten elastischen Drahtabschnitt und der zweiten Seitenwand der Längsnut eingeklemmt werden kann. Die Drahtabschnitte können an einem oberen Ende des Zapfens befestigt sein und sich in Längsrichtung, d. h. entlang der Längsachse der Längsnut, gewellt erstrecken. Zu den Seitenwänden weisende Wellenberge der Drähte bilden dann jeweils zu den Seitenwänden hin gebogene Drahtabschnitte, zwischen denen und der jeweiligen Seitenwand die abgewinkelten Seitenabschnitte des Abdeckbands eingeklemmt werden können.

Obwohl der Zapfen, welcher beispielsweise zylinderförmig sein kann, grundsätzlich auch massiv ausgebildet werden kann, sehen manche Ausführungsbeispiele vor, dass der Zapfen einen Hohlraum aufweist, um einen Kopf eines Befestigungsmittels, wie z. B. einer Schraube oder eines Bolzens, zum Befestigen der Führungsschiene auf einem Maschinenbett in dem Hohlraum aufnehmen zu können. Zusätzlich kann der Zapfen an seinem der Bohrung zugewandten Ende einen Durchlass zur Bohrung aufweisen, der eine geringere radiale Ausdehnung hat als der Kopf des Befestigungsmittels. Beim Eindrehen einer Schraube, deren Schaft durch den Durchlass des Zapfens geführt werden kann und deren Kopf vom Hohlraum des Zapfens aufgenommen wird, kann dadurch der Zapfen des Halteelements in der Bohrung fixiert werden. Beim Eindrehen der Schraube kann ein Endabschnitt des Zapfens zwischen Bohrung und Schraubenkopf eingeklemmt und dadurch fixiert werden.

Während manche Ausführungsbeispiele Vorrichtungen mit einzelnen Halteelementen umfassen, sehen andere Ausführungsbeispiele auch Vorrichtungen mit einer Mehrzahl von miteinander verbundenen Halteelementen und Zapfen zum Eingreifen in eine Mehrzahl von Bohrungen der Führungsschiene vor. Dabei kann die Mehrzahl der Zapfen beispielsweise vermittels einer Mehrzahl von Halteabschnitten miteinander gekoppelt sein. Damit können also sozusagen Ketten von Halteelementen gebildet werden, die eine Mehrzahl vermittels Halteabschnitte miteinander gekoppelter Zapfen aufweisen, welche in entlang der Längsrichtung der Führungsschiene angeordneter Montagebohrungen eingebracht werden können. Bei der vorliegenden Erfindung wird ein System gemäß Anspruch 1 bereitgestellt. Bei der vorliegenden Erfindung wird auch ein Verfahren zum Fixieren eines Abdeckbands in einer Längsnut einer Führungsschiene gemäß Anspruch 8 bereitgestellt. Ausführungsbeispiele der vorliegenden Erfindung sehen also Halterungselemente vor, welche in einer Befestigungs- bzw. Montagebohrung der Schiene befestigt werden können, beispielsweise vermittels Schrauben. Eine Haltekraft ergibt sich durch einen Formschluss zwischen Abdeckband und Halterungselementen, wobei das Abdeckband abgeknickte Schultern aufweist. Die Halterungselemente können in verschiedenen Formen, bevorzugt aus Kunststoff oder aus Verbundmaterialien (z. B. Blech + Kunststoff oder Drahtringe + Kunststoff) gefertigt werden. Wichtig ist eine elastische Kraft, welche die Halterung erzeugt und eine Geometrie des Formschlusses. Des Weiteren kann es vorteilhaft sein, die Kontaktflächen zwischen Abdeckband und Halteelementen robust und verschleißfest auszuführen (z. B. direkter Metallkontakt). Dadurch kann ein Verschleiß bei mehrmaligem Montieren und Demontieren reduziert und die Haltekraft erhöht werden.

Einige Ausführungsbeispiele der vorliegenden Erfindung werden nun nachfolgend Bezug nehmend auf die beiliegenden Figuren erläutert. Es zeigen:
- Fig. 1a: eine perspektivische Darstellung eines Systems umfassend eine Führungsschiene mit einer Längsnut und in der Längsnut endenden Bohrungen, ein Abdeckband und zwei Halteelemente;
- Fig. 1b: einen Querschnitt des Befestigungssystems aus Fig. 1a in montiertem Zustand;
- Fig. 2: einen Querschnitt der Führungsschiene mit Längsnut und Bohrungen der Fig. 1;
- Fig. 3a: eine perspektivische Darstellung eines Halteelements gemäß einem Ausführungsbeispiel der vorliegenden Erfindung;
- Fig. 3b: einen Querschnitt eines Systems aus Führungsschiene, Abdeckband und dem Halteelement gemäß Fig. 3a;
- Fig. 4: eine detaillierte perspektivische Darstellung des Halteelements gemäß Fig. 3a;
- Fig. 5: eine perspektivische Schnittdarstellung eines Systems aus Führungsschiene mit Längsnut und darin gehaltenem Abdeckband, gemäß einem Ausführungsbeispiel;
- Fig. 6a-c: Darstellungen verschiedener Halteelemente gemäß verschiedenen Ausführungsbeispielen der vorliegenden Erfindung;
- Fig. 7a, 7b: perspektivische Darstellungen zweier verschiedener Ausführungsbeispiele für Halteelemente; und
- Fig. 8: einen Querschnitt eines Systems aus Führungsschiene mit Längsnut und darin vermittels Halteelementen gemäß Fig. 7b gehaltenem Abdeckband.

Bei der nachfolgenden detaillierten Figurenbeschreibung bedeuten gleiche Bezugszeichen in unterschiedlichen Figuren gleiche oder ähnliche Elemente bzw. Bauteile.

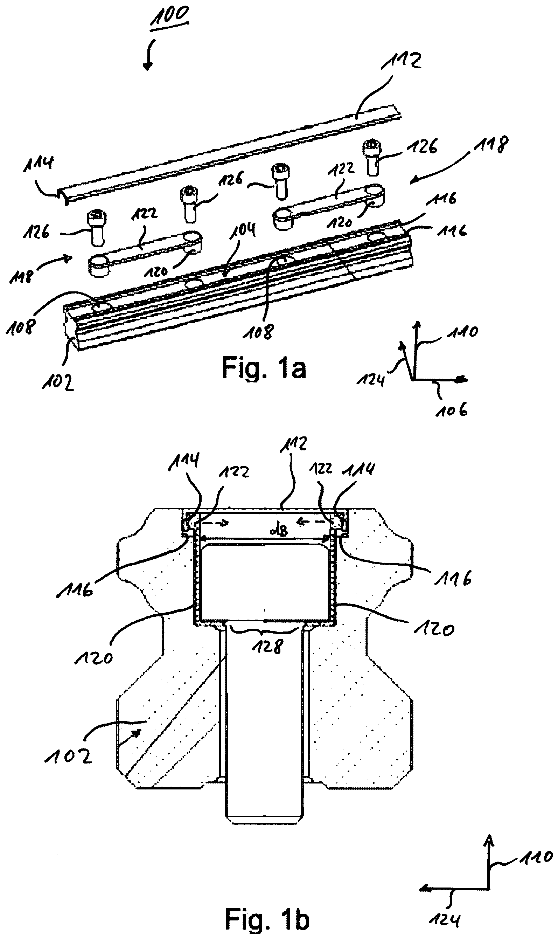

Die Fig. 1a zeigt in perspektivischer Ansicht ein System 100 umfassend eine Führungs- bzw. Profilschiene 102 eines Linearsystems. Auf einer Oberseite weist die Führungsschiene 102 eine Längsnut 104 auf, welche sich in einer Längsrichtung 106 der Führungsschiene erstreckt. Die Führungsschiene 102 weist Montagebohrungen 108 auf, um die Profilschiene 102 auf einem in der Fig. 1a nicht dargestellten Maschinenbett zu befestigen. Die Montagebohrungen 108 verlaufen in einer ersten Richtung 110 senkrecht zu der Längsrichtung 106 und münden auf einer Seite (oben) in der Längsnut 104. Ferner umfasst das System 100 ein Abdeckband 112 zum Abdecken der in der Längsnut 104 endenden Bohrungen 108, wobei das Abdeckband abgewinkelte Seitenabschnitte bzw. -schultern 114 aufweist, die beim Einlegen des Abdeckbands 112 in die Längsnut 104 im Wesentlichen parallel zu Seitenwänden 116 der Längsnut in der ersten Richtung 110 verlaufen können. Das hängt dabei von einem Winkel ab, den ein Mittelabschnitt (zwischen den Seitenabschnitten) mit den Seitenabschnitten einschließt. Dieser Winkel kann beispielsweise in einem Bereich zwischen 70° und 90° liegen. In anderen Worten ausgedrückt kann das Abdeckband einen im Wesentlichen U-förmigen Querschnitt aufweisen mit senkrecht (oder leicht schräg) nach unten weisenden abgewinkelten Seitenabschnitten 114. Ferner ist bei dem System 100 wenigstens ein Halteelement 118 zum Fixieren des Abdeckbands 112 in der Längsnut 104 vorgesehen. Lediglich beispielhaft zeigt die Fig. 1a zwei solcher Halteelemente 118. Jedes der Halteelemente weist wenigstens einen einer Bohrung 108 zugewandten Zapfen 120 zum Eingreifen in die Bohrung 108 auf. Ferner weist jedes Halteelement 118 wenigstens einen dem Abdeckband 112 zugewandten Halteabschnitt 122 auf, der ausgebildet ist, um beim Einbringen des Abdeckbands 112 in die Längsnut 104 auf die abgewinkelten Seitenabschnitte 114 des Abdeckbands eine Haltekraft in eine zweite Richtung 124 auszuüben, die sowohl senkrecht zu der Längsrichtung 106, als auch senkrecht zu der ersten Richtung 110 steht - also im Wesentlichen quer zur Längsrichtung 106 verläuft.

Wie es in der Fig. 1a angedeutet ist, können die Zapfen 120 der Halteelemente 118 in die dafür vorgesehenen Montagebohrungen 108 eingesetzt werden. Gemäß manchen Ausführungsbeispielen sind die Zapfen 120 sowohl zylinderförmig als auch hohl ausgebildet, sodass die Halteelemente 118 vermittels Montageschrauben 126 in den Öffnungen 108 fixiert werden können. Die Halteabschnitte 122 der in den Bohrungen 108 fixierten Halteelemente 118 erstrecken sich dann derart in der Längsnut 104, sodass die abgewinkelten Seitenabschnitte 114 des U-förmigen Abdeckbands 112 in Spalte, die sich zwischen den Halteabschnitten 122 und den Seitenflächen 116 der Längsnut 104 ausbilden können, eingreifen und darin einen Klemmsitz einnehmen können.

Die Querschnittsdarstellung der Fig. 1b zeigt das System 100 aus der Fig. 1a in montiertem Zustand. Es lässt sich erkennen, dass das Halteelement 118, umfassend den Zapfen 120 und den Halteabschnitt 122, ausgebildet ist, um das U-förmige Abdeckband 112 mittels einer formschlüssigen Verbindung zwischen dem Halteabschnitt 122 und der abgewinkelten Seitenabschnitte 114 des Abdeckbands 112 in der Längsnut 104 zu fixieren. In anderen Worten ausgedrückt werden die abgewinkelten Seitenabschnitte 114 des Abdeckbands 112 in der Längsnut 104 zwischen den Halteabschnitten 122 der Halteelemente 118 und den Seitenwänden 116 der Längsnut 104 eingeklemmt. Anhand der Fig. 1b lässt sich erkennen, dass sich das Halteelement 118 in montiertem Zustand mit seinem dem Abdeckband 112 zugewandten Halteabschnitt 122 in der ersten Richtung 110 (d. h. senkrecht nach oben) bis in die Längsnut 104 erstreckt. Eine Ausdehnung bzw. Erstreckung des Halteabschnitts 122 in der zweiten Richtung 124 (d. h. horizontal bzw. quer) ist größer als ein Durchmesser d_{B} der Bohrung 108. In anderen Worten ausgedrückt liegt die horizontale Erstreckung bzw. Ausdehnung des Halteabschnitts 122 also in einem Bereich zwischen dem Durchmesser d_{B} der Bohrung 108 und der horizontalen Erstreckung bzw. Breite der Längsnut 104.

Gemäß Ausführungsbeispielen ist der Halteabschnitt 122 zumindest in der zweiten Richtung 124, d. h. horizontal oder quer zur Längsrichtung 106, elastisch ausgebildet, um beim Einbringen der abgewinkelten Seitenabschnitte 114 des Abdeckbands 112 zwischen den Halteabschnitt 122 und die Seitenwände 116 der Längsnut 104 in horizontaler Richtung nachgeben zu können und, ansprechend darauf, eine elastische Rückstellkraft als Haltekraft zu erhalten, welche die abgewinkelten Seitenabschnitte 114 gegen die Seitenwände 116 der Längsnut 104 drückt. Die soeben beschriebene vorteilhafte Elastizität des Halteabschnitts 122 ist in Fig. 1b durch die gestrichelt eingezeichneten Pfeile in horizontaler Richtung angedeutet.

Bei den in den Fig. 1a und 1b gezeigten Ausführungsbeispielen sind die Halteabschnitte 122 an einem oberen Ende der Zapfen 120 bzw. des gesamten Halteelements 118 angeordnet. Die Halteabschnitte 122 sind ausgebildet, um beim Einbringen des Abdeckbands 112 bzw. dessen abgewinkelten Seitenflächen 114 horizontal nach innen nachzugeben, um Raum für die Seitenabschnitte 114 freizugeben. Durch das elastische Nachgeben nach innen hin ergibt sich eine elastische Feder- bzw. Rückstellkraft in Richtung Seitflächen 116, die einen Form- und/oder Kraftschluss ermöglicht.

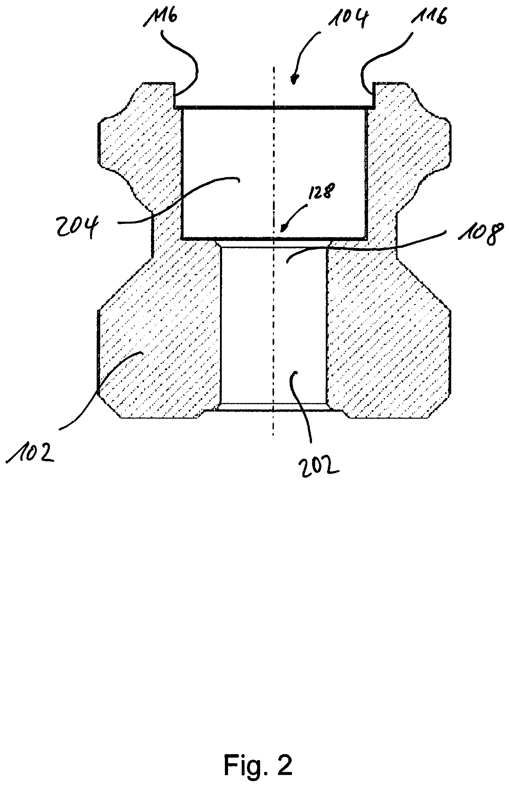

Die Fig. 2 zeigt eine Querschnittsdarstellung der Profilschiene 102 gemäß dem anhand der Fig. 1a und 1b erläuterten Ausführungsbeispiels. Es lässt sich erkennen, dass eine Geometrie der Längsnut 104 in der Breite dem (in Fig. 2 nicht gezeigten) Abdeckband 112 entspricht. In anderen Worten ausgedrückt entspricht die Breite der Längsnut 104 im Wesentlichen der Breite des U-förmigen Abdeckbands 112 bzw. dessen Mittelabschnitts. Die Tiefe der Längsnut 104 (in senkrechter Richtung 110 nach unten) kann größer gewählt werden als die Höhe des abgewinkelten Abdeckbands bzw. dessen abgewinkelter Seitenabschnitte 114. Damit das Abdeckband 112 in montiertem Zustand nicht aus der Längsnut 104 nach oben heraus- bzw. hervorsteht, sollte die Tiefe bzw. Höhe der Seitenflächen 116 der Längsnut 104 aber mindestens der Höhe der abgewinkelten Seitenabschnitte 114 des Abdeckbands entsprechen.

Die Montagebohrung 108 weist einen unteren Abschnitt 202 auf, welcher zur Aufnahme bzw. Durchführung des Schafts einer Montageschraube dient. Ein oberer Abschnitt 204 der Montagebohrung 108 ist derart dimensioniert, dass er sowohl den Kopf des Befestigungsmittels (z. B. Schraube) als auch den Zapfen 120 des Halterungselements, welcher beispielsweise zylinderförmig und hohl ausgebildet sein kann, aufnehmen kann. Wie es bereits in der Fig. 1b gezeigt wurde, kann der Zapfen 120 also einen zylindrischen Hohlraum aufweisen, um einen Kopf eines Befestigungsmittels, wie z. B. einer Schraube, zum Befestigen der Führungsschiene 102 auf einem Maschinenbett in dem Hohlraum aufnehmen zu können. Ferner kann der Zapfen 120 an seinem der Bohrung 108 zugewandten Ende (also unten) einen Durchlass 128 zur Bohrung 108 aufweisen, der eine geringere radiale Ausdehnung hat als der Kopf des Befestigungsmittels. In dem hier dargestellten Ausführungsbeispiel, bei dem das Befestigungsmittel eine Schraube ist, passt also durch den Durchlass 128 zwar der Schaft der Schraube hindurch, jedoch nicht deren Schraubenkopf. Durch Festziehen der Schraube kann der zylinderförmige Zapfen 120 zumindest an seinem unteren Ende zwischen der Profilschiene 102 und der Schraube bzw. deren Schraubenkopf durch Einnehmen eines Klemmsitzes fixiert werden.

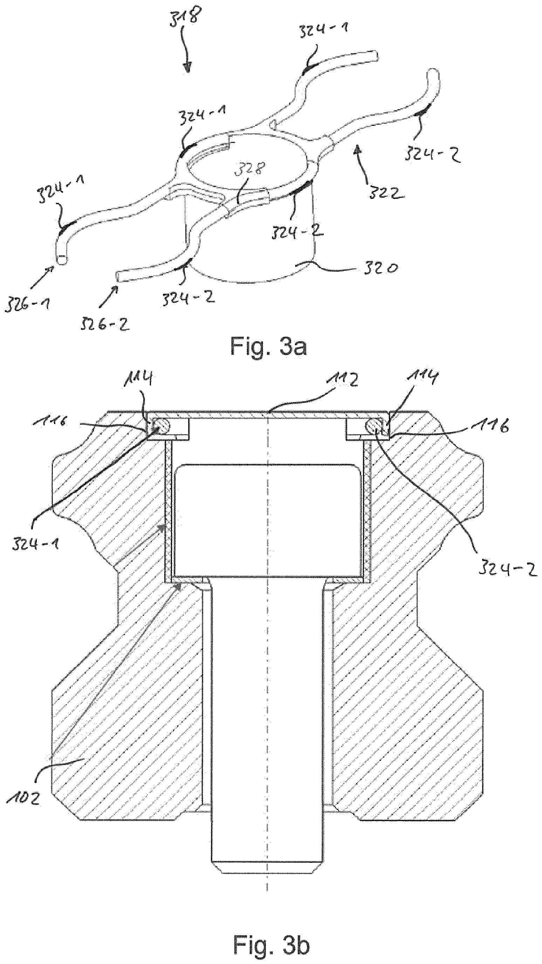

Ein weiteres Ausführungsbeispiel für ein Halteelement 318 ist in der Fig. 3a gezeigt. Auch hier weist das Halteelement 318 einen der Bohrung zugewandten Zapfen 320 zum Eingreifen in die Bohrung 108 auf, sowie einen (in montiertem Zustand) dem Abdeckband zugewandten Halteabschnitt 322, der ausgebildet ist, um beim Einbringen des Abdeckbands in die Längsnut 104 auf dessen abgewinkelte Seitenabschnitte eine (elastische) Haltekraft in Querrichtung auszuüben, die senkrecht zu der Längsachse der Führungsschiene 102 und senkrecht zur ersten Richtung 110 steht. Der Halteabschnitt 322 weist eine Mehrzahl von elastischen Kontaktbereichen 324 auf Erste elastische Kontaktbereiche 324-1 sind einer ersten Seitenwand 116 der Längsnut zugeordnet und zweite elastische Kontaktbereiche 324-2 sind einer zweiten, gegenüberliegenden Seitenwand 116 der Längsnut 104 zugeordnet. Ein erster abgewinkelter Seitenabschnitt 114 des Abdeckbands 112 kann zwischen den ersten elastischen Kontaktbereichen 324-1 und der ersten Seitenwand 116 der Längsnut 104 eingeklemmt werden, ein zweiter abgewinkelter Seitenabschnitt 114 des Abdeckbands 112 kann zwischen den zweiten elastischen Kontaktbereichen 324-2 und der zweiten Seitenwand 116 der Längsnut 104 eingeklemmt werden. Dies ist insbesondere anhand der Querschnittsdarstellung der Fig. 3b zu erkennen. Zwischen einem ersten Kontaktbereich 324-1 und der linken Seitenwand 116 ist der linke abgewinkelte Seitenabschnitt 114 des Abdeckbands 112 formschlüssig fixiert. Zwischen einem zweiten elastischen Kontaktbereich 324-2 und der rechten Seitenwand 116 der Längsnut 104 ist der rechte abgewinkelte Seitenabschnitt 114 des Abdeckbands 112 formschlüssig fixiert.

Bei dem anhand der Fig. 3a und 3b gezeigten Ausführungsbeispiel werden die ersten und zweiten elastischen Kontaktbereiche 324-1, 324-2 jeweils durch zu den entsprechenden Seitenwänden 116 hin gebogene Drahtabschnitte 326 gebildet, sodass der erste abgewinkelte Seitenabschnitt 114 (links) des Abdeckbands 112 zwischen dem ersten elastischen Drahtabschnitt 326-1 und der ersten Seitenwand 116 der Längsnut 104 eingeklemmt werden kann, und sodass der zweite abgewinkelte Seitenabschnitt 114 (rechts) des Abdeckbands 112 zwischen dem zweiten elastischen Drahtabschnitt 326-2 und der zweiten Seitenwand 116 der Längsnut 104 eingeklemmt werden kann. An dem zylinderförmigen Zapfen 320, der beispielsweise aus Kunststoff gebildet sein kann, sind Führungselemente 328 vorgesehen, um die beiden gewellten elastischen Drahtabschnitte 326-1, 326-2 mit dem zylinderförmigen Zapfen 320 zu koppeln und somit das Halteelement 318 zu erhalten.

Bei dem anhand der Fig. 3a und 3b gezeigten Ausführungsbeispiel bilden den Seitwänden 116 der Längsnut zugewandte Wellenberge der gewellten Drahtabschnitte 326-1 und 326-2 die elastischen Kontaktpunkte bzw. -bereiche 324 zur Fixierung des Abdeckbands 112 in der Längsnut 104. Im montierten Zustand des Halteelements, das in der Fig. 3b dargestellt ist, verlaufen die gewellten Drahtabschnitte 326-1 und 326-2 jeweils in der Längsnut 104, während der zylinderförmige Zapfen 320 durch eine Schraube in einer Bohrung 108 fixiert ist. Bei noch nicht in die Längsnut 104 eingelegtem Abdeckband 112 können die elastischen Kontaktbereiche 324-1 und 324-2 durchaus in Kontakt mit den links- und rechtsseitigen Seitenwänden 116 der Längsnut stehen. Beim Einbringen des Abdeckbands 112 in die Längsnut werden die elastischen Kontaktbereiche 324-1, 324-2 in der zweiten Richtung 124 (d.h. quer zur Längsrichtung) nach innen gedrückt. In dem dadurch entstehenden Raum zwischen den Kontaktbereichen 324-1, 324-2 und den Seitenwänden 116 finden dann die abgewinkelten Seitenabschnitte 114 des Abdeckbands 112 Platz und werden durch die elastische Rückstellkraft der gebogenen Drahtabschnitte 326-1, 326-2 nach außen gegen die Seitenwände 116 gedrückt und damit fixiert.

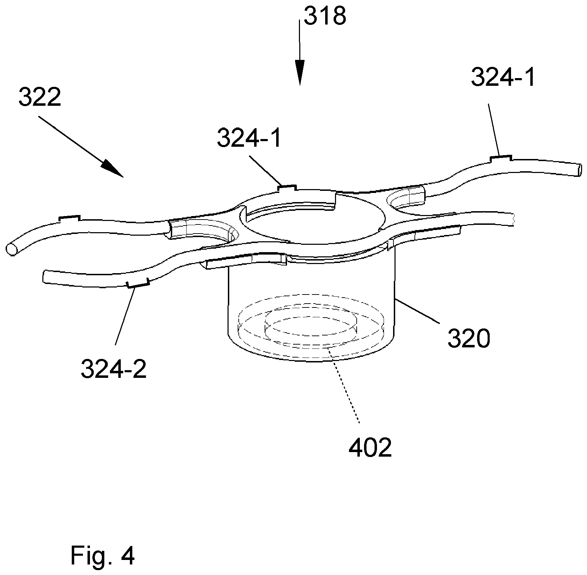

Anhand der Fig. 4 soll zusätzlich verdeutlicht werden, wie ein der Bohrung 108 zugewandtes (unteres) Ende des zylinderförmigen und hohlen Zapfens 320 ausgebildet sein kann. An einer nach unten geöffneten Bodenfläche des hohlen, zylinderförmigen Zapfens 320 kann sich eine Metallscheibe 402 befinden, welche bei der Fixierung des Zapfens 320 in der Bohrung zwischen Schraubenkopf und Führungsschiene 102 eingeklemmt wird und dadurch das gesamte Halteelement 318 in der Bohrung 108 fixiert. Die Metallscheibe 402 kann also einen Außendurchmesser aufweisen, der im Wesentlichen dem Innendurchmesser des zylinderförmigen Zapfens 320 entspricht. Ein Innendurchmesser der Metallscheibe 402 kann dabei derart gewählt werden, dass ein Schaft des Befestigungsmittels, wie z. B. einer Schraube, hindurch passt. Beim Fixieren des Zapfens 320 in der Bohrung 108 drückt eine Unterseite des Schraubenkopfs auf eine Oberseite der Metallscheibe 402 und presst somit die Unterseite des Zapfens 320 gegen entsprechende Wirkflächen in der Bohrung 108. Die Metallscheibe 402 stellt also eine Art Beilagscheibe dar.

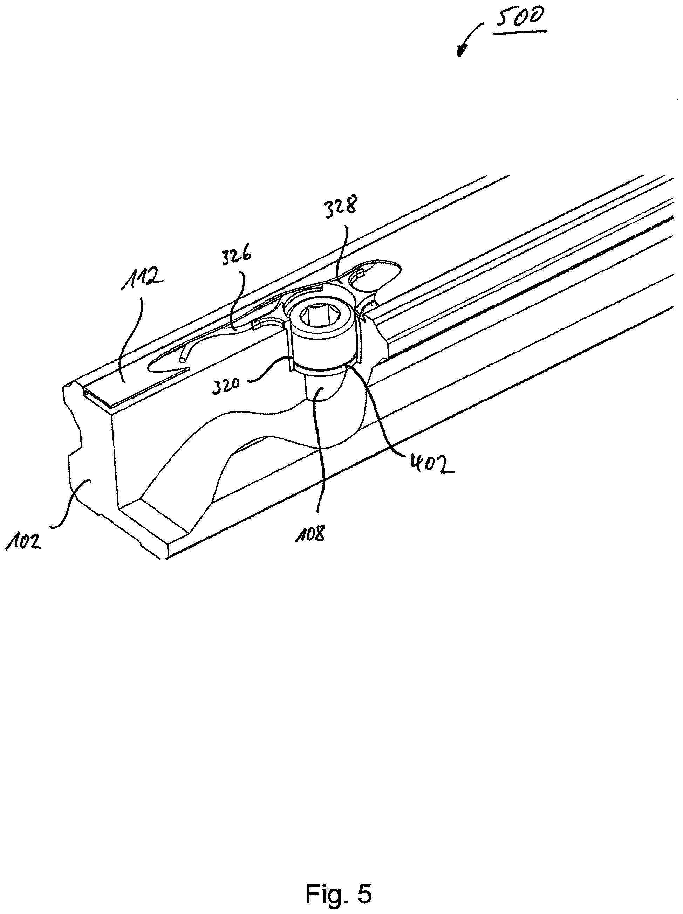

Die Fig. 5 zeigt eine perspektivische Schnittdarstellung eines Systems 500 aus Führungsschiene 102 und in deren Längsnut 104 gehaltenem Abdeckband 112. Es lässt sich erkennen, dass der zylinderförmige und hohle Zapfen 320 des Halteelements 318 durch den Schraubenkopf in der Bohrung 108 der Schiene 102 fixiert wird. Die Halteabschnitte aus gebogenen Metalldrähten 326 dienen in der Längsnut 104 zur Fixierung des Abdeckbands 112, indem sie dessen nach unten in Richtung Längsnut geknickte Seitenabschnitte 114 gegen die Seitenwände 116 der Längsnut 104 drücken. Sämtliche Kontakt- bzw. Wirkflächen 116, 324 und 402 sind in diesem Ausführungsbeispiel metallisch ausgebildet.

Die verschiedenen Teilfiguren 6a, 6b und 6c zeigen verschiedene mögliche Ausführungsvarianten von Halterungselementen.

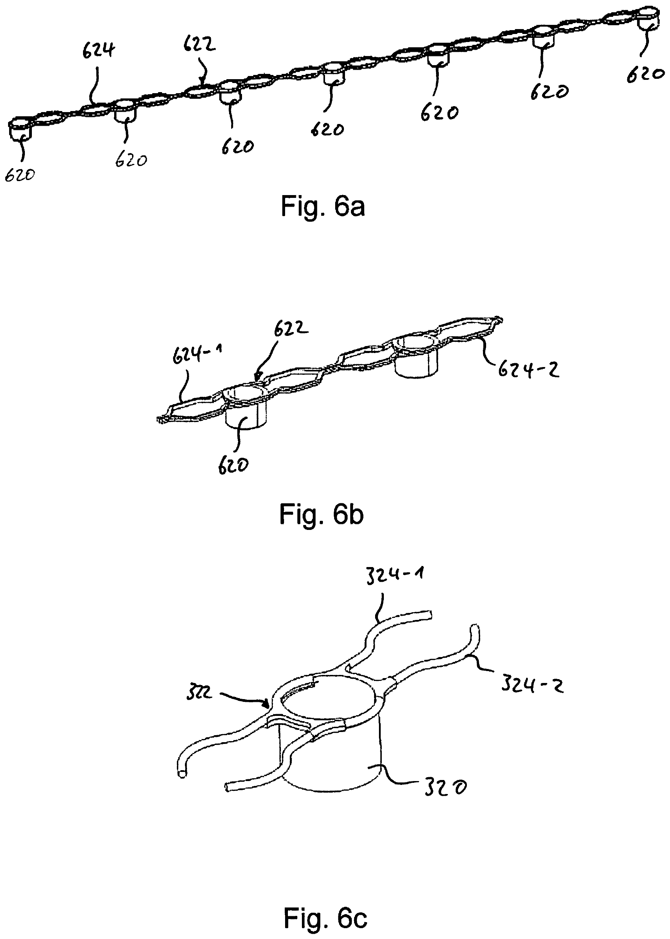

In der Fig. 6a ist exemplarisch ein Halterungselement gezeigt, welches als Kette einzelner Halterungselemente aufgebaut ist. Die gezeigte Halteelementkette weist eine Mehrzahl von Zapfen 620 auf, welche durch Halteabschnitte 622 miteinander gekoppelt sind. Wie auch bei den bisher exemplarisch beschriebenen Ausführungsbeispielen weisen die Halteabschnitte jeweils elastische Kontaktbereiche 624 auf, um die abgewinkelten Seitenabschnitte des Abdeckbands in der Längsnut der Führungsschiene zu fixieren. Das in der Fig. 6a gezeigte Ausführungsbeispiel kann beispielsweise in eine Führungsschiene mit sieben Montagebohrungen, welche in der Längsnut münden, eingesetzt werden.

Die Fig. 6b zeigt ein Ausführungsbeispiel mit einem Doppel-Halteelement, welches aus zwei miteinander gekoppelten Halteelementen aufgebaut ist. Das Doppel-Halteelement weist wiederum zwei zylinderförmige Zapfen 620 auf, welche über Halteabschnitte 622 miteinander gekoppelt sind. Auch bei dieser Ausführungsform weisen die Halteabschnitte 622, welche am abdeckbandseitigen Ende der Zapfen 620 angebracht sind, erste und zweite elastische Kontaktbereiche 624-1, 624-2 auf. Wie es im Vorhergehenden bereits erläutert wurde, können die Halteabschnitte 624 aus verschiedenen Materialien aufgebaut sein, wie z. B. Metall oder Kunststoff. Wichtig dabei ist die Elastizität der Halteabschnitte 622, um das Abdeckband, wie beschrieben, in der Längsnut fixieren zu können.

Die Fig. 6c zeigt das bereits vorher näher erläuterte einzelne Halteelement 318, auf das an dieser Stelle nicht weiter eingegangen werden soll.

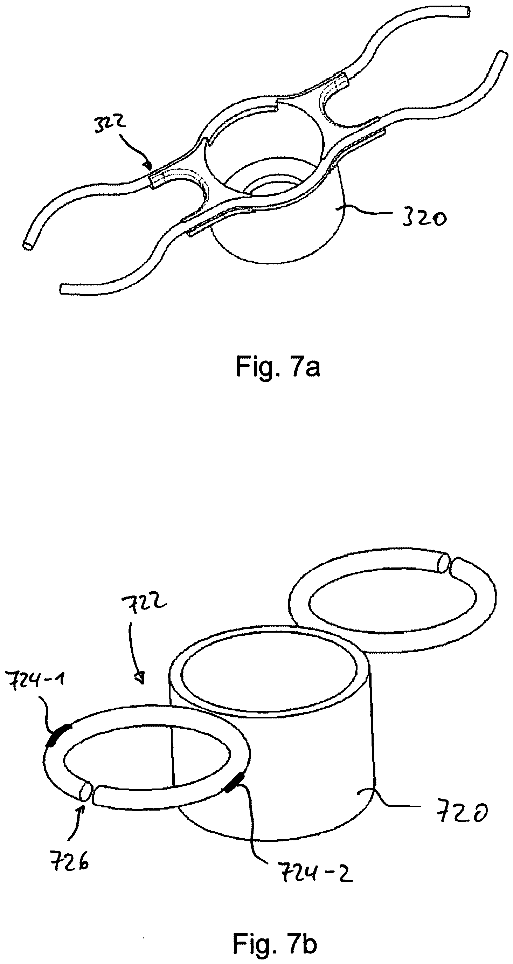

Ein weiteres Ausführungsbeispiel eines Halteelements 718 ist beispielhaft in der Fig. 7b dargestellt. Auch dieses Halteelement 718 weist einen Zapfen 720 zum Eingreifen in eine Bohrung auf und einen Halteabschnitt 722, der ausgebildet ist, um beim Einbringen des Abdeckbands in die Längsnut auf dessen abgewinkelte Seitenabschnitte eine Haltekraft auszuüben. Dazu sind auch hier erste und zweite elastische Kontaktbereiche 724-1, 724-2 vorgesehen, um damit eine Anpresskraft für die abgewinkelten Seitenabschnitte des Abdeckbands zu erzeugen. In dem Ausführungsbeispiel der Fig. 7b werden die Halteabschnitte 722 durch geschlitzte Drahtringe gebildet. Durch den Schlitz 726 wird die Elastizität des Halteabschnitts 722 in horizontaler Richtung noch verstärkt. An dieser Stelle sei angemerkt, dass auch Ausführungsbeispiele denkbar sind, bei denen die Ringe der Halteabschnitte 722 nicht geschlitzt ausgebildet sind. Auch hier können die Halteabschnitte 722 bzw. die Ringe aus Metall (insbesondere Draht) oder Kunststoff gefertigt sein, sodass eine für eine Anwendung geeignete Elastizität der Halteabschnitte gegeben ist.

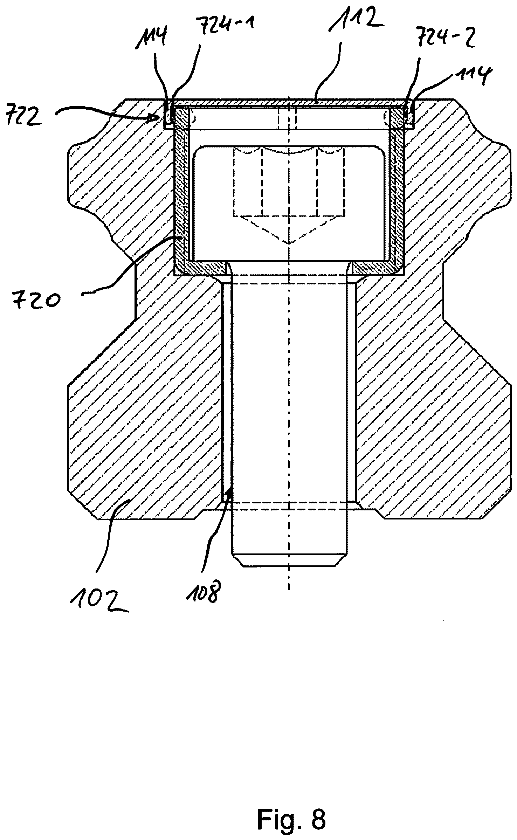

Die Fig. 8 zeigt eine Anordnung aus Führungsschiene 102 mit Längsnut 104 und darin zu befestigendem Abdeckband 112. Die abgewinkelten Seitenabschnitte 114 des Abdeckbands 112 werden durch die Kontaktbereiche 724-1, 724-2 gegen die Seitenwände 116 der Längsnut 104 gedrückt. Der zylinderförmige Zapfen 720 des Halteelements 718 wird durch eine in der Bohrung 108 befindliche Schraube und insbesondere durch deren Schraubenkopf in der Montagebohrung 108 der Führungsschiene 102 fixiert. Zusammenfassend schlagen Ausführungsbeispiele der vorliegenden Erfindung Fixierungsvorrichtungen mit Halterungselementen vor, die verschiedene Formen aufweisen können und bevorzugt aus Kunststoff oder aus Verbundmaterialien, wie z. B. Blech/Kunststoff oder Drahtringe/Kunststoff, gefertigt werden können. Die Halterungselemente weisen sämtlich elastische Halteabschnitte auf, durch die eine Fixierung eines abgeknickten Abdeckbands in der Längsnut der Führungsschiene erreicht wird. Durch die Elastizität der Halteabschnitte (in Querrichtung zur Längsnut) wird eine formschlüssige Verbindung zwischen Halteelement, abgewinkelten Seitenabschnitten des Abdeckbands und Seitenflächen der Längsnut erzeugt. Vorzugsweise sind die Kontaktflächen zwischen Abdeckband und Halteelement robust und verschleißfest ausgeführt, wie es beispielsweise durch einen direkten Metallkontakt erreicht werden kann. Dadurch kann ein Verschleiß bei mehrmaligem Montieren und Demontieren reduziert und die Haltekraft erhöht werden.

Die in der vorstehenden Beschreibung, den Ansprüchen und den Zeichnungen offenbarten Merkmale können sowohl einzeln als auch in beliebiger Kombination für die Verwirklichung der Erfindung, wie sie in den Ansprüchen definiert ist, in ihren verschiedenen Ausgestaltungen von Bedeutung sein.

Obwohl manche Aspekte im Zusammenhang mit einer Vorrichtung beschrieben wurden, versteht es sich, dass diese Aspekte auch eine Beschreibung eines entsprechenden Verfahrens darstellen, sodass ein Block oder ein Bauelement einer Vorrichtung auch als ein entsprechender Verfahrensschritt oder als ein Merkmal eines Verfahrensschritts zu verstehen ist. Analog dazu stellen Aspekte, die im Zusammenhang mit einem oder als ein Verfahrensschritt beschrieben wurden, auch eine Beschreibung eines entsprechenden Blocks oder Details bzw. Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt ist.

### Bezugszeichenliste

- 100: System aus Führungsschiene mit fixiertem Abdeckband
- 102: Führungsschiene
- 104: Längsnut
- 106: Längsrichtung, Längsachse der Führungsschiene
- 108: Montagebohrung
- 110: erste Richtung senkrecht zur Längsrichtung
- 112: Abdeckband
- 114: abgewinkelte Seitenabschnitte des Abdeckbands
- 116: Seitenflächen der Längsnut
- 118: Halteelement
- 120: zylinderförmiger Zapfen
- 122: Halteabschnitt
- 124: zweite Richtung senkrecht zur Längsrichtung und zur ersten Richtung
- 126: Montageschrauben
- 128: Durchlass
- 202: Bohrung für Schraubenschaft
- 204: Bohrung für Schraubenkopf
- 318: Halteelement gemäß einem Ausführungsbeispiel
- 320: zylinderförmiger Zapfen
- 322: Halteabschnitt
- 324: Kontaktfläche, Kontaktbereich
- 326: gebogener bzw. gewellter Draht
- 328: Führung bzw. Halterung für Halteabschnitt
- 402: Unterleg- bzw. Beilagscheibe
- 500: fertig montiertes System aus Führungsschiene und darin fixiertem Abdeckband
- 620: Zapfen
- 622: Halteabschnitt
- 624: elastische Kontaktflächen
- 720: Zapfen
- 722: Halteabschnitt
- 724: Kontaktflächen
- 726: Schlitz in geschlitztem Drahtring

## Patentansprüche

1. System (100; 500), mit folgenden Merkmalen:
einer Führungsschiene (102) mit einer Längsnut (104) und in der Längsnut endenden Bohrungen (108), welche in einer ersten Richtung (110) senkrecht zu einer Längsachse der Führungsschiene (102) verlaufen;
einem Abdeckband (112) zum Abdecken von den in der Längsnut (104) endenden Bohrungen (108), wobei das Abdeckband (112) abgewinkelte Seitenabschnitte (114) aufweist, die beim Einlegen des Abdeckbandes (112) in die Längsnut (104) in Richtung der Längsachse weisen; und
wenigstens einem Halteelement (118; 318; 718), wobei das Halteelement an einem einer Bohrung (108) zugewandten Ende einen Zapfen (120; 320; 620; 720) zum Eingreifen in die Bohrung (108) aufweist, und wobei das Halteelement (118; 318; 718) einen dem Abdeckband (112) zugewandten Halteabschnitt (122; 322; 622; 722) aufweist, der ausgebildet ist, um beim Einbringen des Abdeckbandes (112) in die Längsnut (104) auf dessen abgewinkelte Seitenabschnitte (114) eine Haltekraft in eine zweite Richtung (124) auszuüben, die senkrecht zu der Längsachse der Führungsschiene (102) und senkrecht zu der ersten Richtung (110) ist,
wobei der Halteabschnitt (122; 322; 622; 722) zumindest in der zweiten Richtung (124) elastisch ausgebildet ist, um beim Einbringen der abgewinkelten Seitenabschnitte (114) des Abdeckbandes (112) zwischen den Halteabschnitt (122; 322; 622; 722) und die Seitenwände (116) der Längsnut (104) in der zweiten Richtung (124) nachgeben zu können und ansprechend darauf eine elastische Rückstellkraft als Haltekraft zu erhalten, welche die abgewinkelten Seitenabschnitte (114) des Abdeckbandes (112) gegen die Seitenwände (116) der Längsnut drückt.

2. System nach Anspruch 1, wobei das wenigstens eine Halteelement (118; 318; 718) ausgebildet ist, um das Abdeckband (112) mittels einer form- und/oder kraftschlüssigen Verbindung zwischen dem Halteabschnitt (122; 322; 622; 722), der abgewinkelten Seitenabschnitte (114) des Abdeckbands (112) und der Seitenflächen (116) der Längsnut in der Längsnut (104) zu fixieren.

3. System nach Anspruch 1 oder 2, wobei sich das wenigstens eine Halteelement (118; 318; 718) in montiertem Zustand mit seinem dem Abdeckband zugewandten Halteabschnitt (122; 322; 622; 722) in der ersten Richtung (110) bis in die Längsnut (104) erstreckt, und wobei eine Erstreckung des Halteabschnitts (122; 322; 622; 722) in der zweiten Richtung (124) größer ist als ein Durchmesser der Bohrung (108).

4. System nach einem der vorhergehenden Ansprüche, wobei der Halteabschnitt (122; 322; 622; 722) einen ersten und einen zweiten elastischen Kontaktbereich (324; 724) aufweist, wobei der erste elastische Kontaktbereich (324-1; 724-1) einer ersten Seitenwand (116) der Längsnut (104) zugeordnet ist und wobei der zweite elastische Kontaktbereich (324-2; 724-2) einer zweiten gegenüberliegenden Seitenwand (116) der Längsnut (104) zugeordnet ist, und wobei ein erster abgewinkelter Seitenabschnitt (114) des Abdeckbands zwischen dem ersten elastischen Kontaktbereich (324-1; 724-1) und der ersten Seitenwand (116) der Längsnut eingeklemmt wird, und wobei ein zweiter abgewinkelter Seitenabschnitt (114) des Abdeckbands zwischen dem zweiten elastischen Kontaktbereich (324-2; 724-2) und der zweiten Seitenwand (116) der Längsnut eingeklemmt wird.

5. System nach Anspruch 4, wobei der erste und der zweite elastische Kontaktbereich (324; 724) jeweils durch zu der ersten und der zweiten Seitenwand (116) hin gebogene Drahtabschnitte (326; 726) gebildet werden, sodass der erste abgewinkelte Seitenabschnitt (114) des Abdeckbands zwischen dem ersten elastischen Drahtabschnitt (326; 726) und der ersten Seitenwand (116) der Längsnut eingeklemmt werden kann, und sodass der zweite abgewinkelte Seitenabschnitt (114) des Abdeckbands zwischen dem zweiten elastischen Drahtabschnitt (326; 726) und der zweiten Seitenwand (116) der Längsnut eingeklemmt werden kann.

6. System nach einem der vorhergehenden Ansprüche, wobei der Zapfen (120; 320; 620; 720) einen Hohlraum aufweist, um einen Kopf eines Befestigungsmittels zum Befestigen der Führungsschiene (102) auf einem Maschinenbett in dem Hohlraum aufnehmen zu können, und wobei der Zapfen (120; 320; 620; 720) an seinem der Bohrung (108) zugewandten Ende einen Durchlass zur Bohrung (108) aufweist, der eine geringere radiale Ausdehnung hat als der Kopf des Befestigungsmittels.

7. System nach einem der vorhergehenden Ansprüche, mit einer Mehrzahl von Zapfen (120; 320; 620; 720) zum Eingreifen in eine Mehrzahl von Bohrungen (108) der Führungsschiene (102), wobei die Mehrzahl von Zapfen vermittels einer Mehrzahl von Halteabschnitten (122; 322; 622; 722) miteinander gekoppelt ist.

8. Verfahren zum Fixieren eines Abdeckbandes (112) in einer Längsnut (104) einer Führungsschiene (102), wobei das Abdeckband (112) zum Abdecken von in der Längsnut (104) endenden Bohrungen (108) der Führungsschiene (102) dient, die in einer ersten Richtung (110) senkrecht zu einer Längsachse der Führungsschiene (102) verlaufen wobei das Abdeckband (112) abgewinkelte Seitenabschnitte (114) aufweist, die beim Einlegen des Abdeckbandes (112) in die Längsnut (104) in Richtung der Längsachse weisen, mit folgenden Schritten:
Bereitstellen wenigstens eines Halteelements (118; 318; 718), welches an seinem einer Bohrung (108) zugewandten Ende einen Zapfen (120; 320; 620; 720) zum Eingreifen in die Bohrung (108) aufweist, und welches einen dem Abdeckband (112) zugewandten Halteabschnitt (122; 322; 622; 722) aufweist, der ausgebildet ist, um beim Einbringen des Abdeckbandes (112) in die Längsnut (104) auf dessen abgewinkelte Seitenabschnitte (104) eine Haltekraft in eine zweite Richtung (124) auszuüben, die senkrecht zu der Längsachse der Führungsschiene (102) und senkrecht zu der ersten Richtung (110) ist, wobei der Halteabschnitt (122; 322; 622; 722) zumindest in der zweiten Richtung (124) elastisch ausgebildet ist, um beim Einbringen der abgewinkelten Seitenabschnitte (114) des Abdeckbandes (112) zwischen den Halteabschnitt (122; 322; 622; 722) und die Seitenwände (116) der Längsnut (104) in der zweiten Richtung (124) nachgeben zu können und ansprechend darauf eine elastische Rückstellkraft als Haltekraft zu erhalten, welche die abgewinkelten Seitenabschnitte (114) des Abdeckbandes (112) gegen die Seitenwände (116) der Längsnut drückt;
Einbringen des Zapfens (120; 320; 620; 720) des wenigstens einen Halteelements (118; 318; 718) in die Bohrung (108) und Fixieren des Zapfens in der Bohrung mit einem Befestigungsmittel;
Fixieren des Abdeckbands (112) in der Längsnut (104) vermittels des Halteabschnitts (122; 322; 622; 722) des wenigstens einen Halteelements (118; 318; 718).

## Claims

1. System (100; 500), with the following features:
a guide rail (102) with a longitudinal groove (104) and bores (108) which end in the longitudinal groove and in a first direction (110) run perpendicularly to a longitudinal axis of the guide rail (102);
a cover strip (112) for covering the bores (108) which end in the longitudinal groove (104), wherein the cover strip (112) has angled side portions (114) which, when the cover strip (112) is placed into the longitudinal groove (104), point in the direction of the longitudinal axis; and
at least one holding element (118; 318; 718), wherein the holding element has, at an end facing a bore (108), a pin (120; 320; 620; 720) for engaging in the bore (108), and wherein the holding element (118; 318; 718) has a holding portion (122; 322; 622; 722) which faces the cover strip (112) and which is designed in order, when the cover strip (112) is introduced into the longitudinal groove (104), to exert a holding force on the angled side portions (114) of said longitudinal groove in a second direction (124) which is perpendicular to the longitudinal axis of the guide rail (102) and perpendicular to the first direction (110),
wherein the holding portion (122; 322; 622; 722) is of elastic design at least in the second direction (124) in order, when the angled side portions (114) of the cover strip (112) are introduced between the holding portion (122; 322; 622; 722) and the side walls (116) of the longitudinal groove (104), to be able to yield in the second direction (124) and, in response thereto, to obtain an elastic resetting force as the holding force which presses the angled side portions (114) of the cover strip (112) against the side walls (116) of the longitudinal groove.

2. System according to Claim 1, wherein the at least one holding element (118; 318; 718) is designed in order to fix the cover strip (112) in the longitudinal groove (104) by means of a form- and/or force-fitting connection between the holding portion (122; 322; 622; 722), the angled side portions (114) of the cover strip (112) and the side surfaces (116) of the longitudinal groove.

3. System according to Claim 1 or 2, wherein, in the mounted state, the at least one holding element (118; 318; 718) extends with its holding portion (122; 322; 622; 722), which faces the cover strip, in the first direction (110) into the longitudinal groove (104), and wherein an extent of the holding portion (122; 322; 622; 722) in the second direction (124) is greater than a diameter of the bore (108).

4. System according to one of the preceding claims, wherein the holding portion (122; 322; 622; 722) has a first and a second elastic contact region (324; 724), wherein the first elastic contact region (324-1; 724-1) is assigned to a first side wall (116) of the longitudinal groove (104), and wherein the second elastic contact region (324-2; 724-2) is assigned to a second opposite side wall (116) of the longitudinal groove (104), and wherein a first angled side portion (114) of the cover strip is clamped between the first elastic contact region (324-1; 724-1) and the first side wall (116) of the longitudinal groove, and wherein a second angled side portion (114) of the cover strip is clamped between the second elastic contact region (324-2; 724-2) and the second side wall (116) of the longitudinal groove.

5. System according to Claim 4, wherein the first and the second elastic contact region (324; 724) are each formed by wire portions (326; 726) bent towards the first and the second side wall (116), and therefore the first angled side portion (114) of the cover strip can be clamped between the first elastic wire portion (326; 726) and the first side wall (116) of the longitudinal groove, and therefore the second angled side portion (114) of the cover strip can be clamped between the second elastic wire portion (326; 726) and the second side wall (116) of the longitudinal groove.

6. System according to one of the preceding claims, wherein the pin (120; 320; 620; 720) has a cavity in order to be able to receive a head of a fastening means for fastening the guide rail (102) on a machine bed in the cavity, and wherein the pin (120; 320; 620; 720) has, at its end facing the bore (108), a passage to the bore (108), said passage having a smaller radial extent than the head of the fastening means.

7. System according to one of the preceding claims, with a plurality of pins (120; 320; 620; 720) for engaging in a plurality of bores (108) of the guide rail (102), wherein the plurality of pins are coupled to one another by means of a plurality of holding portions (122; 322; 622; 722).

8. Method for fixing a cover strip (112) in a longitudinal groove (104) of a guide rail (102), wherein the cover strip (112) serves for covering bores (108) of the guide rail (102), said bores ending in the longitudinal groove (104) and running in a first direction (110) perpendicularly to a longitudinal axis of the guide rail (102), wherein the cover strip (112) has angled side portions (114) which, when the cover strip (112) is placed into the longitudinal groove (104), point in the direction of the longitudinal axis, with the following steps:
providing at least one holding element (118; 318; 718) which, at its end facing a bore (108), has a pin (120; 320; 620; 720) for engaging in the bore (108), and which has a holding portion (122; 322; 622; 722) which faces the cover strip (112) and which is designed in order, when the cover strip (112) is introduced into the longitudinal groove (104), to exert a holding force on the angled side portions (114) of said longitudinal groove in a second direction (124) which is perpendicular to the longitudinal axis of the guide rail (102) and perpendicular to the first direction (110), wherein the holding portion (122; 322; 622; 722) is of elastic design at least in the second direction (124) in order, when the angled side portions (114) of the cover strip (112) are introduced between the holding portion (122; 322; 622; 722) and the side walls (116) of the longitudinal groove (114), to be able to yield in the second direction (124) and, in response thereto, to obtain an elastic resetting force as the holding force which presses the angled side portions (114) of the cover strip (112) against the side walls (116) of the longitudinal groove;
introducing the pin (120; 320; 620; 720) of the at least one holding element (118; 318; 718) into the bore (108) and fixing the pin in the bore with a fastening means;
fixing the cover strip (112) in the longitudinal groove (104) by means of the holding portion (122; 322; 622; 722) of the at least one holding element (118; 318; 718).

## Revendications

1. Système (100 ; 500) comprenant les caractéristiques suivantes :
un rail de guidage (102) avec une rainure longitudinale (104) et des alésages (108) se terminant dans la rainure longitudinale, lesquels s'étendent dans une première direction (110) perpendiculairement à un axe longitudinal du rail de guidage (102) ;
une bande de recouvrement (112) pour recouvrir les alésages (108) se terminant dans la rainure longitudinale (104), la bande de recouvrement (112) présentant des portions latérales coudées (114) qui, lors de l'insertion de la bande de recouvrement (112) dans la rainure longitudinale (104), sont orientées dans la direction de l'axe longitudinal ; et
au moins un élément de retenue (118 ; 318 ; 718), l'élément de retenue présentant, au niveau d'une extrémité tournée vers un alésage (108), un tourillon (120 ; 320 ; 620 ; 720) destiné à s'engager dans l'alésage (108), et l'élément de retenue (118 ; 318 ; 718) présentant une portion de retenue (122 ; 322 ; 622 ; 722) tournée vers la bande de recouvrement (112), qui est réalisée de manière à exercer, lors de l'insertion de la bande de recouvrement (112) dans la rainure longitudinale (104), une force de retenue dans une deuxième direction (124) sur ses portions latérales coudées (114), ladite deuxième direction étant perpendiculaire à l'axe longitudinal du rail de guidage (102) et perpendiculaire à la première direction (110),
la portion de retenue (122 ; 322 ; 622 ; 722) étant réalisée sous forme élastique au moins dans la deuxième direction (124), afin de pouvoir fléchir dans la deuxième direction (124) lors de l'insertion des portions latérales coudées (114) de la bande de recouvrement (112) entre la portion de retenue (122 ; 322 ; 622 ; 722) et les parois latérales (116) de la rainure longitudinale (104) et en réaction à cette flexion, d'acquérir une force de rappel élastique en tant que force de retenue, laquelle presse les portions latérales coudées (114) de la bande de recouvrement (112) contre les parois latérales (116) de la rainure longitudinale.

2. Système selon la revendication 1, dans lequel l'au moins un élément de retenue (118 ; 318 ; 718) est réalisé de manière à fixer la bande de recouvrement (112) dans la rainure longitudinale (104) au moyen d'une connexion par engagement par correspondance de formes et/ou par force entre la portion de retenue (122 ; 322 ; 622 ; 722), les portions latérales coudées (114) de la bande de recouvrement (112) et les surfaces latérales (116) de la rainure longitudinale.

3. Système selon la revendication 1 ou 2, dans lequel l'au moins un élément de retenue (118 ; 318 ; 718), dans l'état monté, s'étend avec sa portion de retenue (122 ; 322 ; 622 ; 722) tournée vers la bande de recouvrement dans la première direction (110) jusque dans la rainure longitudinale (104), et une étendue de la portion de retenue (122 ; 322 ; 622 ; 722) dans la deuxième direction (124) étant plus grande qu'un diamètre de l'alésage (108) .

4. Système selon l'une quelconque des revendications précédentes, dans lequel la portion de retenue (122 ; 322 ; 622 ; 722) présente une première et une deuxième région de contact élastique (324 ; 724), la première région de contact élastique (324-1; 724-1) étant associée à une première paroi latérale (116) de la rainure longitudinale (104) et la deuxième région de contact élastique (324-2 ; 724-2) étant associée à une deuxième paroi latérale opposée (116) de la rainure longitudinale (104), et une première portion latérale coudée (114) de la bande de recouvrement étant serrée entre la première région de contact élastique (324-; 724-1) et la première paroi latérale (116) de la rainure longitudinale, et une deuxième portion latérale coudée (114) de la bande de recouvrement étant serrée entre la deuxième région de contact élastique (324-2 ; 724-2) et la deuxième paroi latérale (116) de la rainure longitudinale.

5. Système selon la revendication 4, dans lequel la première et la deuxième région de contact élastique (324 ; 724) sont à chaque fois formées par des portions de fils métalliques (326 ; 726) cintrées vers la première et la deuxième paroi latérale (116), de telle sorte que la première portion latérale coudée (114) de la bande de recouvrement puisse être serrée entre la première portion de fil métallique élastique (326 ; 726) et la première paroi latérale (116) de la rainure longitudinale, et de telle sorte que la deuxième portion latérale coudée (114) de la bande de recouvrement puisse être serrée entre la deuxième portion de fil métallique élastique (326 ; 726) et la deuxième paroi latérale (116) de la rainure longitudinale.

6. Système selon l'une quelconque des revendications précédentes, dans lequel le tourillon (120 ; 320 ; 620 ; 720) présente une cavité afin de pouvoir recevoir dans la cavité une tête d'un moyen de fixation pour la fixation du rail de guidage (102) sur un banc de machine, et le tourillon (120 ; 320 ; 620 ; 720) présentant, au niveau de son extrémité tournée vers l'alésage (108), un passage vers l'alésage (108), qui présente une plus faible étendue radiale que la tête du moyen de fixation.

7. Système selon l'une quelconque des revendications précédentes, comprenant une pluralité de tourillons (120 ; 320 ; 620 ; 720) destinés à s'engager dans une pluralité d'alésages (108) du rail de guidage (102), la pluralité de tourillons étant accouplés les uns aux autres au moyen d'une pluralité de portions de retenue (122 ; 322 ; 622 ; 722).

8. Procédé de fixation d'une bande de recouvrement (112) dans une rainure longitudinale (104) d'un rail de guidage (102), la bande de recouvrement (112) servant à recouvrir des alésages (108) du rail de guidage (102) se terminant dans la rainure longitudinale (104), qui s'étendent dans une première direction (110) perpendiculairement à un axe longitudinal du rail de guidage (102), la bande de recouvrement (112) présentant des portions latérales coudées (114) qui, lors de l'insertion de la bande de recouvrement (112) dans la rainure longitudinale (104), sont tournées dans la direction de l'axe longitudinal,
comprenant les étapes suivantes :
la fourniture d'au moins un élément de retenue (118 ; 318 ; 718), qui présente, au niveau de son extrémité tournée vers un alésage (108), un tourillon (120 ; 320 ; 620 ; 720) destiné à s'engager dans l'alésage (108), et qui présente une portion de retenue (122 ; 322 ; 622 ; 722) tournée vers la bande de recouvrement (112), laquelle est réalisée pour exercer sur ses portions latérales coudées (104) une force de retenue dans la deuxième direction (124) lors de l'introduction de la bande de recouvrement (112) dans la rainure longitudinale (104), ladite deuxième direction étant perpendiculaire à l'axe longitudinal du rail de guidage (102) et perpendiculaire à la première direction (110), la portion de retenue (122 ; 322 ; 622 ; 722) étant réalisée sous forme élastique au moins dans la deuxième direction (124), afin de pouvoir fléchir dans la deuxième direction (124) lors de l'insertion des portions latérales coudées (114) de la bande de recouvrement (112) entre la portion de retenue (122 ; 322 ; 622 ; 722) et les parois latérales (116) de la rainure longitudinale (104) et en réaction à cette flexion, d'acquérir une force de rappel élastique en tant que force de retenue, laquelle presse les portions latérales coudées (114) de la bande de recouvrement (112) contre les parois latérales (116) de la rainure longitudinale ;
l'insertion du tourillon (120 ; 320 ; 620 ; 720) de l'au moins un élément de retenue (118 ; 318 ; 718) dans l'alésage (108) et la fixation du tourillon dans l'alésage avec un moyen de fixation ;
la fixation de la bande de recouvrement (112) dans la rainure longitudinale (104) au moyen de la portion de retenue (122 ; 322 ; 622 ; 722) de l'au moins un élément de retenue (118 ; 318 ; 718).
